# EUROPÄISCHE PATENTSCHRIFT

(11) **EP 2 778 148 B1**
(45) Veröffentlichungstag und Bekanntmachung des Hinweises auf die Patenterteilung: **21.09.2016**
(21) Anmeldenummer: 14160378.7
(22) Anmeldetag: 17.03.2014
(51) Int. Cl.: C05F 5/00, C05D 9/00

(54) **Düngemittelerzeugnis sowie Verfahren und Vorrichtung zu dessen Herstellung**
Fertiliser product and method and device for producing the same
Produit d'engrais, son procédé et son dispositif de fabrication

(30) Priorität: 15.03.2013 DE 102013004621
(43) Veröffentlichungstag der Anmeldung: 17.09.2014
(73) Patentinhaber: Flatken, Johannes, 26169 Friesoythe (DE); Gülker, Ludwig, 28857 Ristedt (DE)
(72) Erfinder: Flatken, Johannes, 26169 Friesoythe (DE); Gülker, Ludwig, 28857 Ristedt (DE)
(74) Vertreter: Jabbusch, Matthias

(56) Entgegenhaltungen:
- WO-A2-2011/018505
- K KULIGOWSKI ET AL.: "Plant-availability to barley of phosphorus in ash from thermally treated animal manure in comparison to other manure based materials and commercial fertilizers", EUROPEAN JOURNAL OF AGRONOMY, Bd. 33, Nr. 4, 2010, Seiten 293-303, XP002730659, Elsevier ISSN: 1161-0301

## Beschreibung

Die Erfindung betrifft ein Düngemittelerzeugnis aus einem Gärreste einer Biogasanlage, aufweisenden Wirtschaftsdünger. Außerdem betrifft die Erfindung ein Verfahren zum Aufbereiten von Gärresten aus Biogasanlagen zu einem Wirtschaftsdünger. Und Schließlich betrifft die Erfindung eine Vorrichtung zum Aufbereiten von Gärresten aus Biogasanlagen, mit wenigstens einem Behandlungsraum.

In einer Biogasanlage wird die in biologischen Substraten beziehungsweise Stoffen gespeicherte Energie zunächst durch Gärprozesse in die biochemische Bindungsenergie eines Biogases, dann durch Verbrennen dieses Biogases in einer Verbrennungsmaschine in Wärme sowie kinetische Energie und schließlich in einem Generator in elektrische Energie umgewandelt. Nach Ablauf der in der Biogasanlage ablaufenden biochemischen Reaktionen verbleiben sogenannte Gärreste. Diese Gärreste sind ein wässriges Gemisch, mit einem Feststoffanteil von 7 % bis 10 %. Der Feststoffanteil besteht aus biologisch schwer abbaubarem organischen Material, anorganischen Stoffen sowie den Spurenelementen Stickstoff, Phosphor und Schwefel. Das Volumen der Gärreste kann schließlich jedoch noch bis zu 70 % des Volumens des ursprünglich eingesetzten biologischen Substrats betragen.

Für einen effizienten Betrieb ist der Anlagenbetreiber gehalten, die Biogasanlage fortwährend mit biologischen Substraten wie beispielsweise Maissilage, Mist und Gülle zu beschicken. Da für die Erzeugung sämtlichen biologischen Materials landwirtschaftliche Flächen benötigt werden, führt der Ausbau der Biogaserzeugung unweigerlich zu dem von Umweltschützern kritisierten Flächenverbrauch und damit zu steigenden Hektarpreisen in der gesamten Landwirtschaft. Im Zuge der von der Bundesregierung eingeleiteten Energiewende gewinnt auch die Biogaserzeugung zunehmend an Bedeutung. Insbesondere in den sogenannten Veredelungsregionen stehen Landwirte jedoch aufgrund der anfallenden Mengen an Gülle, Mist und Gärresten vor dem Problem einer massiven Überdüngung ihrer Flächen. Ein Abtransport von Gülle, Mist und Gärresten aus Veredelungsregionen heraus in nährstoffärmere Ackerbauregionen hinein stellt für Landwirte und Anlagenbetreiber oftmals jedoch einen finanziell untragbaren Kostenfaktor dar. Die Folge ist eine alarmierende Belastung des Grundwassers mit gesundheitlichen Folgen für die in den Veredelungsregionen lebenden Menschen.

Die internationale Patentanmeldung WO 2011/01 85 05 A2 beschreibt eine ähnliche Vorrichtung oder ein ähnliches Verfahren zur Erzeugung von Biogas mit Biokohle sowie ein Verfahren zur Veredelung dieser Biokohle. Der Focus dieser Anmeldeschrift liegt in der Aufbereitung der Biokohle zu einem mineralstoffangereicherten Bodenhilfsstoff, zu einem geträgerten Mineraldünger oder zu einem Kultursubstrat. Die Biokohle wird mittels thermochemischer Karbonisierung unter Luftabschluss bei Temperaturen zwischen 350° C und 1.000° C hergestellt.

In dem Bericht "Plant-availability to barley of phosphorus in ash from thermally treated animal ...", veröffentlicht im Europäischen Journal für Agrarwissenschaften, Band 33, Nr. 4, 2010, geht es um die pflanzliche Verfügbarkeit des in der Asche von thermisch behandeltem tierischem Dung enthaltenen Phosphors für die Getreidesorte Gerste im Vergleich zu anderen dungbasierten Produkten und kommerziellen Düngern. Aus Kapitel *"2.3 Asche und Dünger"* sowie der Tabelle 2 geht hervor, dass das als *"PEL"* bezeichnete Material ein Feststoffanteil ist, der aus einer Mischung aus Rinder- und Schweinedung sowie Abfällen aus der Lebensmittelindustrie abgeschieden wurde. Diese Mischung wird durch die dänische Firma *Fangel Biogas Plant* vertrieben. Die Abscheidung der Feststoffe erfolgt durch Zentrifugieren, Trocken und Pelletieren. Die Vergasung des *"PEL"* zu Asche erfolgt bei einer Temperatur oberhalb von 730° C.

Der Erfindung liegt die Aufgabe zugrunde, ein Düngemittelerzeugnis, ein Verfahren sowie eine Vorrichtung der eingangs genannten Gattung aufzuzeigen, mit denen eine Überdüngung von Veredelungsregionen auf besonders kostengünstige Weise verhindert ist.

Diese Aufgabe ist erfindungsgemäß durch die Merkmale der voneinander unabhängigen Patentansprüche 1, 8 und 19 gelöst. Vorteilhafte Weiterbildungen sind in den jeweils auf diese Patentansprüche rückbezogenen Unteransprüchen angegeben.

Das erfindungsgemäße Düngemittelerzeugnis zeichnet sich dadurch aus, dass der Wirtschaftsdünger ein Trockenschüttgut mit aus verbranntem Biogas stammenden Verbrennungsrückständen ist. Diese sind Zeugnis einer Trocknung des Wirtschaftsdüngers mittels der heißen Verbrennungsgase eines verbrannten Biogases. Durch die überaus hohen Temperaturen der Verbrennungsgase weist das mit Ihnen getrocknete Schüttgut einen geringen Restfeuchtegehalt sowie eine vorteilhaft niedrige Anzahl pathogener Keime auf. Auch sind in dem Trockenschüttgut enthaltene Pflanzensamen durch die hohen Temperaturen der Verbrennungsgase keimunfähig geworden. Bei einem niedrigen Restfeuchtegehalt des Trockenschüttgutes weist das erfindungsgemäße Düngemittelerzeugnis eine entsprechend geringe Dichte auf und ist deshalb besonders kostengünstig aus Veredelungsregionen in nährstoffarme Ackerbauregionen transportierbar.

Nach einer ersten Weiterbildung des erfindungsgemäßen Düngemittelerzeugnisses weist das Trockenschüttgut einen einheitlichen Trocknungsgrad auf. Dieser ist von entscheidender Bedeutung für eine möglichst homogene Beschaffenheit und eine möglichst lange Lagerfähigkeit des erfindungsgemäßen Düngemittelerzeugnisses.

Nach einer nächsten Weiterbildung des erfindungsgemäßen Düngemittelerzeugnisses sind das Trockenschüttgut und wenigstens ein ätherisches Öl zu einem Handelsdünger miteinander vermengt. Ätherische Öle haben fungizide und antibakterielle Eigenschaften, mit denen die Lagerfähigkeit des Düngemittelerzeugnisses weiter verbessert ist. Außerdem entweichen ätherischen Ölen, insbesondere Kräuterölen, vom menschlichen Geruchssinn als angenehm empfundene Duftstoffe, mit denen vorteilhaft andere vom menschlichen Geruchssinn als unangenehm empfundene Geruchsstoffe vollständig oder nahezu vollständig überdeckt werden. Derart unangenehme Geruchsstoffe sind insbesondere den Gärresten anhaftende Fäulnisgerüche, die aus dem mikrobiellen Aufbau organischer Stoffe, also dem die Gärreste hinterlassenden Gärprozess, stammen. Je nach Art und Verwendung des Düngemittelerzeugnisses können ätherische Öle mit unterschiedlichen Duftstoffen zum Einsatz kommen. Aufgrund der antiseptischen Wirkung des ätherischen Öls ist mit den Gärresten ein besonders transportwürdiges Handelsprodukt ausgebildet, mit welchem das erfindungsgemäße Düngemittelerzeugnis alternativ auch als Einstreu in der Geflügel- und Milchviehhaltung eingesetzt werden kann.

Nach einer anderen Weiterbildung der Erfindung sind das Trockenschüttgut und wenigstens ein Aufschlussmittel für einen Handelsdünger miteinander vermengt. Mit derartigen Aufschlussmitteln ist insbesondere die Verwertbarkeit der im Wirtschaftsdünger enthaltenen Nährstoffe für bestimmte Pflanzenarten oder für Pflanzen im Allgemeinen verbessert. Ein für eine derartige Verbesserung der Verwertbarkeit geeignetes Aufschlussmittel ist beispielsweise hochprozentige Schwefelsäure, mit welcher im Wirtschaftsdünger enthaltenes Ammoniak zu Ammoniumsulfat aufgeschlossen wird. Andere Aufschlussmittel sind Phosphorsäure, Salpetersäure und verschiedene Huminsäuren.

Für einen effizienten Einsatz des erfindungsgemäßen Düngemittelerzeugnisses in der gartenbaulichen Pflanzenproduktion wird vorgeschlagen, das Trockenschüttgut und wenigstens einen Torf zu einem Pflanzsubstrat miteinander zu vermengen. Derartige Pflanzsubstrate werden auch als Torfkultursubstrate bezeichnet und dienen als Grundlage für eine Vielzahl von Blumen- und Spezialerden. Ein Gemenge des Trockenschüttgutes mit Komposterden und anderen humosen Bodensubstanzen liegt selbstverständlich im Rahmen dieser Erfindung.

Nach einer nächsten Weiterbildung der Erfindung ist das Trockenschüttgut zu Presslingen eines Handelsproduktes verdichtet. Aufgrund ihrer verdichteten Masse ist mit den Presslingen die Transportwürdigkeit des Handelsprodukts weiter verbessert. Hilfsweise kann das erfindungsgemäße Düngemittelerzeugnis auch als Zusatzbrennstoff in einer Verbrennungsanlage verfeuert werden kann.

Alternativ wird vorgeschlagen, dass Trockenschüttgut zu einem Granulat eines Handelsdüngers zu verdichten. Aufgrund seiner verdichteten Masse mit einem beispielsweise Schüttgewicht zwischen 400 und 600 kg/m³ ist mit dem Granulat die Transportwürdigkeit des Handelsdünger ebenfalls weiter verbessert, so dass das erfindungsgemäße Düngemittelerzeugnis im kostengünstigen Austausch mit Futtermittelerzeugnissen aus den Veredelungsregionen in ferner liegende Ackerbauregionen verfrachtet werden kann.

Verfahrensmäßig ist die Erfindung dadurch gekennzeichnet, dass die Gärreste mit Verbrennungsgasen unter Abführung von Wasserdampf zu einem Trockenschüttgut eingetrocknet werden. Die regelmäßig zwischen 450° und 520° liegende Temperatur der Verbrennungsabgase ermöglicht eine Art Schocktrocknung der in den Gärresten enthaltenen Feststoffe mit einer Trocknungszeit von beispielsweise zehn Minuten. Mit dem durch Schocktrocknung generierten Austrocknen der Gärreste werden die Feststoffe unter Erhalt des Trockenschüttgutes mit den in Wirtschaftsdüngern enthaltenen löslichen Substanzen wie Phosphor angereichert. Auch werden in den biologischen Stoffen enthaltene keimfähige Pflanzensamen sowie reproduktionsfähige pathogene Keime und Bakterien durch die in den Verbrennungsabgasen vorherrschenden Temperaturen abgetötet. Die Nutzung der in den Verbrennungsabgasen enthaltenen Wärme erlaubt eine vorteilhaft besonders kostengünstige Aufbereitung von Gärresten zu einem transportwürdigen Düngemittelerzeugnis, so dass eine Überdüngung von Veredelungsregionen nachhaltig verhindert ist.

Nach einer ersten Weiterbildung des erfindungsgemäßen Verfahrens werden biologische Stoffe unter Entstehung eines Biogases vergoren, wobei das Biogas unter Abgabe von Energie zu den Verbrennungsgasen verbrannt wird. Das Vergären der biologischen Stoffe wird vorzugsweise kontrolliert in einem Fermenter einer Biogasanlage durchgeführt. Die nachfolgende Verbrennung des Biogases erfolgt vorzugsweise unter Verrichtung mechanischer Arbeit an einer Motor-Generator-Einheit. Grundsätzlich liegt es jedoch im Rahmen dieser Erfindung, die Gärreste mit Verbrennungsgasen einzutrocknen, die aus anderen Verbrennungen, beispielsweise aus Müllverbrennungsanlagen oder Kohlekraftwerken stammen.

Um die Trocknungszeit maximal zu verkürzen, wird vorgeschlagen, die Gärreste während ihres Eintrocknens zu wenden. Mit jedem Wendevorgang wird die von den Verbrennungsgasen überströmte Oberfläche der Gärreste vergrößert. Eine besonders große Verdunstungsleistung ergibt sich aus kontinuierlich an den Gärresten durchgeführten Wendevorgängen. Es versteht sich, dass im Rahmen der Wendevorgänge an den Gärresten auftretende Rühr-, Umwälz- oder Verwirbelungsprozesse die Verdunstungsleistung weiter verbessern.

Nach einer besonders vorteilhaften Weiterbildung der Erfindung werden das Trockenschüttgut und wenigstens ein ätherisches Öl zu einem Handelsdünger miteinander vermengt. Die Vermengung erfolgt vorzugsweise durch ein Zerstäuben des ätherischen Öls in einem das Trockenschüttgut mit sich führenden Abgasstrom. Mit dem ätherischen Öl wird das Trockenschüttgut nachhaltig vor einer Besiedelung mit pathogenen Pilzen, Keimen und Bakterien geschützt, so dass die Lagerfähigkeit des Handelsdüngers nachhaltig verbessert ist. Zudem wird dem Handelsdünger mit dem ätherischen Öl eine für den menschlichen Geruchssinn angenehme Duftnote verliehen.

Nach einer nächsten Weiterbildung der Erfindung werden das Trockenschüttgut und wenigstens ein Aufschlussmittel zu einem Handelsdünger miteinander vermengt. Die Vermengung erfolgt hier vorzugsweise ebenfalls durch ein Zerstäuben des Aufschlussmittels in einem das Trockenschüttgut mit sich führenden Abgasstrom. Mit dem Aufschlussmittel werden vorzugsweise in dem Trockenschüttgut enthaltene, für Pflanzen nicht verwertbare Substanzen in für Pflanzen verwertbare Substanzen aufgeschlossen.

Mit einem weiterführenden Verfahrensschritt wird vorgeschlagen, das Trockenschüttgut und wenigstens einen Torf zu einem Pflanzsubstrat miteinander zu vermengen. In diesem Fall erfolgt die Vermengung vorzugsweise durch ein Zusammenschütten des Trockenschüttgutes, insbesondere des daraus hergestellten Handelsdüngers, und des eine möglichst eine rieselfähige Konsistenz aufweisenden Torfs. Mit diesem erhält das Pflanzsubstrat einen besonders belastbaren Wasser- und Nährstoffspeicher.

Alternativ zu der Vermengung mit einem Torf wird vorgeschlagen, das Trockenschüttgut zu Presslingen zu pelletieren. Das Pelletieren erfolgt vorzugsweise durch ein Zusammenpressen vorbestimmter Portionen des Trockenschüttgutes, insbesondere des daraus hergestellten Handelsdüngers, zu formbeständigen Festkörpern. Das mit diesen Festkörpern zu Presslingen zusammengefügte Trockenschüttgut wird schließlich besonders kostengünstig aus den Veredelungsregionen heraus in nährstoffärmere Ackerbauregionen hinein transportiert. Alternativ können mit derartigen Presslingen unter Freigabe von Energie jedoch auch Verbrennungsanlagen befeuert und deren Verbrennungsgase zum neuerlichen Eintrocknen biologischer Stoffe genutzt werden.

Für eine Herstellung eines besonders gleichmäßig auf Ackerland ausbringbaren Düngemittelerzeugnisses wird vorgeschlagen, die Presslinge zu einem Granulat zu zerkleinern. Grundsätzlich liegt es jedoch im Rahmen dieser Erfindung, das Trockenschüttgut, insbesondere den daraus hergestellten Handelsdünger, zu einem Granulat zu extrudieren. Besonders kurze Trocknungszeiten können erreicht werden, wenn die Gärreste während ihrer Trocknung mit den Verbrennungsgasen zu einem homogenen Wirbelstrom miteinander vermengt werden. Die Vermengung erfolgt entweder aktiv über Verwirbelungen generierende Leitungseinbauten oder auch passiv über die an den Leitungswandungen oder dem Trockenschüttgut auftretenden Grenzschichtablösungen. Zur Eintrocknung werden die Gärreste entweder im Gegenstromverfahren oder im Gleichstromverfahren durch die Verbrennungsabgase hindurch bewegt.

Die Vorrichtung betreffend zeichnet sich die Erfindung dadurch aus, dass der Behandlungsraum in einem Abgasstrang einer Biogasverbrennung ausgebildet ist und wenigstens eine Beschickungsöffnung für die Gärreste aufweist. Die Biogasverbrennung kann einen Verbrennungsmotor oder eine Gastrubine aufweisen und ist auf einen Generator zur Umwandlung mechanischer Arbeit in elektrische Energie aufgeschaltet. Der im Inneren des Abgasstranges ausgebildete Behandlungsraum ist als Trocknungskammer zur Eintrocknung der über die Beschickungsöffnung zugeführten Gärreste ausgebildet. Der Behandlungsraum ist vorzugsweise für eine kontinuierliche Aufbereitung der Gärreste ausgelegt, kann grundsätzlich jedoch auch für eine diskontinuierliche bzw. batchweise Aufbereitung ausgelegt sein.

Nach einer ersten Weiterbildung der erfindungsgemäßen Vorrichtung ist im Inneren des Behandlungsraumes ein Wendemechanismus für die Gärreste angeordnet. Der Wendemechanismus weist beispielsweise ein rotierendes Schaufelrad auf, dessen Schaufeln die Gärreste in dem Behandlungsraum vorwährenden Wende-, Umwälz- oder Umschichtprozessen aussetzen. Für eine Oberflächenvergrößerung an den einzutrocknenden Gärresten kann das Schaufelrad mit Zerkleinerungswerkzeugen ausgerüstet sein, die insbesondere dazu geeignet sind, langfaserige oder verklumpte Bestandteile der Gärreste aufzutrennen. Um eine Ablagerung der Gärreste an den den Behandlungsraum ausbildenden Wandungen zu vermeiden, können diese über Wärmetauscherflächen mit dem Kühlkreislauf eines einer Biogasanlage zugehörigen Verbrennungsmotors auf eine Temperatur von beispielsweise 80° vorgewärmt werden.

Nach einer nächsten Weiterbildung der Erfindung ist in den Abgasstrang wenigstens ein dem Behandlungsraum nachgeordneter Feinstaubfilter eingebaut. Der Feinstaubfilter arbeitet beispielsweise mit sogenannten Filtertaschen, durch die die im Behandlungsraum mit Wasserdampf beaufschlagten Verbrennungsgase hindurchgeführt und schließlich in die Atmosphäre eingeleitet werden.

Nach einer anderen Weiterbildung der Erfindung ist in den Abgasstrang wenigstens ein dem Behandlungsraum nachgeordneter Kondensatabscheider eingebaut. Mit dem dem Feinstaubfilter nachgeschalteten Kondensatabscheider werden aus den feuchtigkeitsbeladenen Verbrennungsgasen insbesondere auch die von gasförmigen Wassermolekülen getragenen Schadstoffe ausgeschieden.

Ein Ausführungsbeispiel der Erfindung, aus dem sich weitere erfinderische Merkmale ergeben, ist in der Zeichnung dargestellt. Es zeigen:
- Fig. 1:: eine schematische Ansicht einer Vorrichtung zum Aufbereiten von Gärresten;
- Fig. 2:: eine schematische Ansicht eines Behandlungsraumes für die Vorrichtung gemäß Fig. 1;

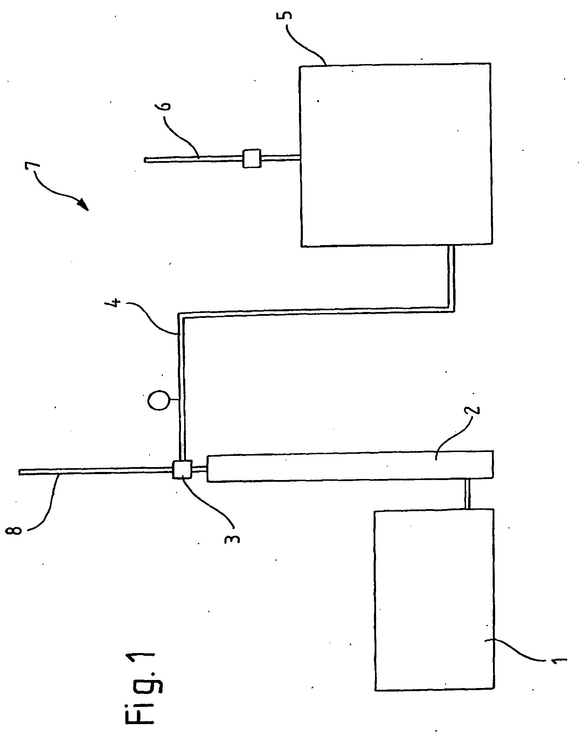

Die Fig. 1 zeigt eine schematische Ansicht einer Vorrichtung zum Aufbereiten von Gärresten mit einem in einem Abgasstrang 7 einer Biogasverbrennung 1 ausgebildeten Behandlungsraum 5. Die als Verbrennungsmotor ausgebildete Biogasverbrennung 1 wird mit einem in einer Biogasanlage (nicht dargestellt) erzeugten Biogas versorgt und treibt einen ebenfalls nicht dargestellten Generator an. Der Abgasstrang 7 weist einen Schalldämpfer 2, eine Überführungsleitung 4 sowie zwei Rauchabzüge 6, 8 auf, wobei der Rauchabzug 8 über einen Drei-Wege-Absperrhahn 3 mit der Überführungsleitung 4 und dem Schalldämpfer 2 verschaltet ist. Der Behandlungsraum 5 ist zwischen der Überführungsleitung 4 und dem Rauchabzug 6 angeordnet.

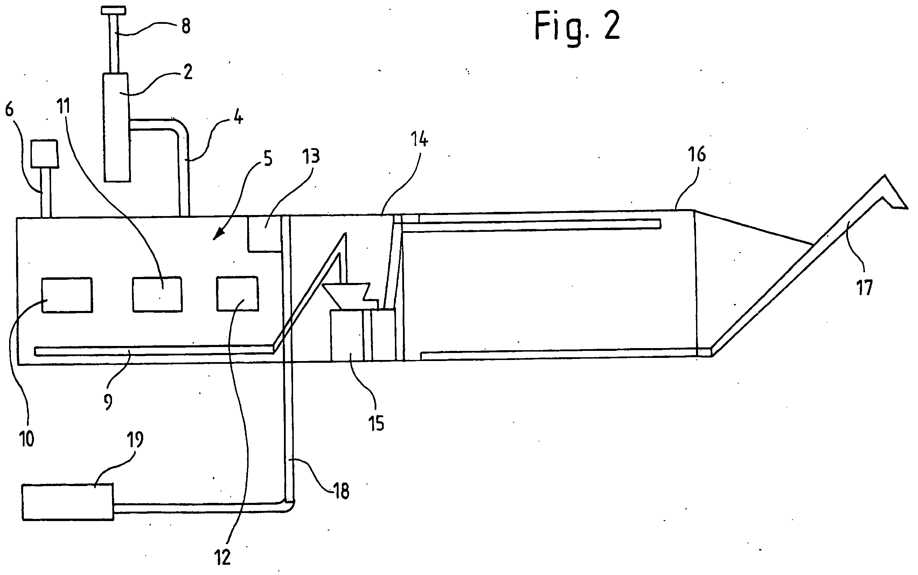

Die Fig. 2 zeigt eine schematische Seitenansicht des zwischen der Überführungsleitung 4 und dem Rauchabzug 6 im Abgasstrang 7 ausgebildeten Behandlungsraumes 5. Dieser weist eine Förderschnecke 9 zum Eintrocknen der Gärreste in ein Trockenschüttgut sowie Mittel 10, 11, 12 zum Wenden der von der Förderschnecke 9 bewegten Gärreste auf. Außerdem weist der Behandlungsraum 5 eine Mischeinrichtung 13 auf, über welche dem Trockenschüttgut am Ende der Förderschnecke 9 Aufschlussmittel und ätherische Öle zugeführt werden. Der Behandlungsraum 5 ist in einem Technikcontainer 14 mit einer Pelletiereinrichtung 15 angeordnet, in welcher das Trockenschüttgut zu einem Handelsprodukt pelletiert wird. An den Technikcontainer 14 schließt sich ein Lagercontainer 16 an, in welchem das pelletierte Handelsprodukt zwischengelagert wird. Ein Austrag des Handelsproduktes aus dem Lagercontainer 16 heraus erfolgt schließlich über eine Förderschnecke 17. Die Mischeinrichtung 12 ist über eine Abführleitung 18 an einen Steinfang 19 angeschlossen, über welchen in dem Trockenschüttgut enthaltene Steine und andere Verunreinigungen höherer Dichte ausgeschieden werden.

## Patentansprüche

1. Düngemittelerzeugnis aus einem Gärreste einer Biogasanlage aufweisenden Wirtschaftsdünger,
**dadurch gekennzeichnet,**
**dass** der Wirtschaftsdünger ein Verbrennungsrückstände aus einem verbrannten Biogas aufweisendes Trockenschüttgut ist.

2. Düngemittelerzeugnis nach Anspruch 1, **dadurch gekennzeichnet, dass** das Trockenschüttgut einen einheitlichen Trocknungsgrad aufweist.

3. Düngemittelerzeugnis nach einem der Ansprüche 1 und 2, **dadurch gekennzeichnet, dass** das Trockenschüttgut und wenigstens ein ätherisches Öl zu einem Handelsdünger miteinander vermengt sind.

4. Düngemittelerzeugnis nach einem der Ansprüche 1 bis 3, **dadurch gekennzeichnet, dass** das Trockenschüttgut und wenigstens ein Aufschlussmittel zu einem Handelsdüngers miteinander vermengt sind.

5. Düngemittelerzeugnis nach Anspruch 3 oder 4, **dadurch gekennzeichnet, dass** das Trockenschüttgut und wenigstens ein Torf zu einem Pflanzsubstrat miteinander vermengt sind.

6. Düngemittelerzeugnis nach einem der Ansprüche 3 bis 5, **dadurch gekennzeichnet, dass** das Trockenschüttgut zu Presslingen eines Handelsproduktes verdichtet ist.

7. Düngemittelerzeugnis nach einem der Ansprüche 3 bis 5, **dadurch gekennzeichnet, dass** das Trockenschüttgut zu einem Granulat eines Handelsproduktes verdichtet ist.

8. Verfahren zum Aufbereiten von Gärresten aus Biogasanlagen zu einem Wirtschaftsdünger, insbesondere zur Herstellung eines Düngemittelerzeugnisses nach einem der Ansprüche 1 bis 7,
**dadurch gekennzeichnet,**
**dass** die Gärreste mit Verbrennungsgasen unter Abführung von Wasserdampf zu einem Trockenschüttgut eingetrocknet werden.

9. Verfahren nach Anspruch 8, **dadurch gekennzeichnet, dass** biologische Stoffe unter Entstehung eines Biogases vergoren werden und dass das Biogas unter Abgabe von Energie zu den Verbrennungsgasen verbrannt wird.

10. Verfahren nach Anspruch 8 oder 9, **dadurch gekennzeichnet, dass** die Gärreste während ihres Eintrocknens gewendet werden.

11. Verfahren nach einem der Ansprüche 8 bis 10, **dadurch gekennzeichnet, dass** das Trockenschüttgut und wenigstens ein ätherisches Öl zu einem Handelsdünger miteinander vermengt werden.

12. Verfahren nach einem der Ansprüche 8 bis 11, **dadurch gekennzeichnet, dass** das Trockenschüttgut und wenigstens ein Aufschlussmittel zu einem Handelsdünger miteinander vermengt werden.

13. Verfahren nach einem der Ansprüche 8 bis 12, **dadurch gekennzeichnet, dass** das Trockenschüttgut und wenigstens ein Torf zu einem Pflanzsubstrat miteinander vermengt werden.

14. Verfahren nach einem der Ansprüche 8 bis 12, **dadurch gekennzeichnet, dass** das Trockenschüttgut zu Presslingen pelletiert wird.

15. Verfahren nach Anspruch 14, **dadurch gekennzeichnet, dass** die Presslinge zu einem Granulat zerkleinert werden.

16. Verfahren nach einem der Ansprüche 8 bis 15, dass die biologischen Stoffe während ihrer Trocknung mit den Verbrennungsgasen zu einem homogenen Wirbelstrom miteinander vermengt werden.

17. Vorrichtung zum Aufbereiten von Gärresten aus Biogasanlagen mit wenigstens einem Behandlungsraum, insbesondere zur Durchführung eines Verfahrens nach einem der Ansprüche 8 bis 16,
**dadurch gekennzeichnet,**
**dass** der Behandlungsraum (5) in einem Abgasstrang (7) einer Biogasverbrennung (1) ausgebildet ist und wenigstens eine Beschickungsöffnung für die Gärreste aufweist.

18. Vorrichtung nach Anspruch 17, **dadurch gekennzeichnet, dass** im Inneren des Behandlungsraumes (5) ein Wendemechanismus für die Gärreste angeordnet ist.

19. Vorrichtung nach Anspruch 17 oder 18, **dadurch gekennzeichnet, dass** in den Abgasstrang (7) wenigstens ein dem Behandlungsraum (5) nachgeordneter Feinstaubfilter eingebaut ist.

20. Vorrichtung nach einem der Ansprüche 17 bis 19, **dadurch gekennzeichnet, dass** in den Abgasstrang (7) wenigstens ein dem Behandlungsraum (5) nachgeordneter Kondensatabscheider eingebaut ist.

## Claims

1. A fertilizer product made from a farm fertilizer having fermentation residues from a biogas plant,
**characterized in**
**that** the farm fertilizer is a dry bulk material having combustion residues from a combusted biogas.

2. The fertilizer product according to claim 1, **characterized in that** the dry bulk material has a uniform degree of dryness.

3. The fertilizer product according to any one of claims 1 and 2, **characterized in that** the dry bulk material and at least one essential oil are mixed together so as to form a commercial fertilizer.

4. The fertilizer product according to any one of claims 1 to 3, **characterized in that** the dry bulk material and at least one decomposition agent are mixed together so as to form a commercial fertilizer.

5. The fertilizer product according to claim 3 or 4, **characterized in that** the dry bulk material and at least one peat material are mixed together so as to form a plant substrate.

6. The fertilizer product according to any one of claims 3 to 5, **characterized in that** the dry bulk material is compressed so as to form pellets of a commercial product.

7. The fertilizer product according to any one of claims 3 to 5, **characterized in that** the dry bulk material is compressed so as to form a granulate of a commercial product.

8. A method for processing fermentation residues from biogas plants so as to form a farm fertilizer, in particular for producing a fertilizer product according to any one of claims 1 to 7,
**characterized in**
**that** fermentation residues are dried up with combustion gases while discharging water vapor.

9. The method according to claim 8, **characterized in that** biological gases are fermented thereby producing a biogas and that the biogas is combusted into the combustion gases thereby releasing energy.

10. The method according to claim 8 or 9, **characterized in that** the fermentation residues are turned during their drying process.

11. The method according to any one of claims 8 to 10, **characterized in that** the dry bulk material and at least one essential oil are mixed together so as to form a commercial fertilizer.

12. The method according to any one of claims 8 to 11, **characterized in that** the dry bulk material and at least one decomposition agent are mixed together so as to form a commercial fertilizer.

13. The method according to any one of claims 8 to 12, **characterized in that** the dry bulk material and at least one peat material are mixed together so as to form a plant substrate.

14. The method according to any one of claims 8 to 12, **characterized in that** the dry bulk material is pelletized into pellets.

15. The method according to claim 14, **characterized in that** the pellets are crushed so as to form a granulate.

16. The method according to any one of claims 8 to 15, **characterized in that** the biological substances during their drying process are mixed together with the combustion gases so as to form a homogenous vortex flow.

17. A device for processing fermentation residues from biogas plants, comprising at least one treatment chamber, in particular for carrying out a method according to any one of claims 8 to 16,
**characterized in**
**that** the treatment chamber (5) is formed in an exhaust gas system (7) for biogas combustion system (1) and has at least one infeed opening for the fermentation residues.

18. The device according to claim 17, **characterized in that** a turning mechanism for the fermentation residues is arranged inside the treatment chamber (5).

19. The device according to claim 17 or 18, **characterized in that** at least one fine particulate air filter arranged downstream of the treatment chamber (5) is installed in the exhaust gas system (7).

20. The device according to any one of claims 17 to 19, **characterized in that** at least one condensate separator arranged downstream of the treatment chamber (5) is installed in the exhaust gas system (7).

## Revendications

1. Produit fertilisant, à partir d'effluents comportant des restes de fermentation d'une installation de biogaz,
**caractérisé en ce que**
les effluents sont des restes de combustion d'une matière sèche en vrac comportant du biogaz brûlé.

2. Produit fertilisant selon la revendication 1, **caractérisé en ce que** la matière sèche en vrac fait preuve d'un taux de séchage homogène.

3. Produit fertilisant selon l'une quelconque des revendications 1 et 2, **caractérisé en ce que** la matière sèche en vrac et au moins une huile essentielle sont mélangées ensemble en un engrais commercial.

4. Produit fertilisant selon l'une quelconque des revendications 1 à 3, **caractérisé en ce que** la matière sèche en vrac et au moins un agent de dissolution sont mélangés ensemble en un engrais commercial.

5. Produit fertilisant selon la revendication 3 ou la revendication 4, **caractérisé en ce que** la matière sèche en vrac et au moins une tourbe sont mélangées ensemble en un substrat végétal.

6. Produit fertilisant selon l'une quelconque des revendications 3 à 5, **caractérisé en ce que** la matière sèche en vrac est comprimée en pièce pressées d'un produit commercial.

7. Produit fertilisant selon l'une quelconque des revendications 3 à 5, **caractérisé en ce que** la matière sèche en vrac est comprimée en des granulés d'un produit commercial.

8. Procédé destiné à préparer des restes de fermentation provenant d'installations au biogaz en un engrais commercial, notamment pour la fabrication d'un produit fertilisant selon l'une quelconque des revendications 1 à 7,
**caractérisé en ce qu'**
on fait sécher les restes de fermentation avec des gaz de combustion en une matière sèche en vrac, en évacuant la vapeur d'eau.

9. Procédé selon la revendication 8, **caractérisé en ce qu'**on fait fermenter des substances biologiques en développant un biogaz et **en ce qu'**on fait brûler le biogaz pour obtenir les gaz de combustion, en délivrant de l'énergie.

10. Procédé selon la revendication 8 ou la revendication 9, **caractérisé en ce qu'**on utilise les restes de fermentation pendant leur séchage.

11. Procédé selon l'une quelconque des revendications 8 à 10, **caractérisé en ce qu'**on mélange la matière sèche en vrac et au moins une huile essentielle en un engrais commercial.

12. Procédé selon l'une quelconque des revendications 8 à 11, **caractérisé en ce qu'**on mélange la matière sèche en vrac et au moins un agent de dissolution en un engrais commercial.

13. Procédé selon l'une quelconque des revendications 8 à 12, **caractérisé en ce qu'**on mélange la matière sèche en vrac et au moins une tourbe en un substrat végétal.

14. Procédé selon l'une quelconque des revendications 8 à 12, **caractérisé en ce qu'**on agglomère la matière sèche en vrac en pièces pressées.

15. Procédé selon la revendication 14, **caractérisé en ce qu'**on fractionne les pièces pressées en granulés.

16. Procédé selon l'une quelconque des revendications 8 à 15, **caractérisé en ce que** pendant leur séchage, on mélange ensemble les substances biologiques avec les gaz de combustion en un flux tourbillonnaire.

17. Dispositif destiné à préparer des restes de fermentation à partir de biogaz, avec au moins un espace de traitement, notamment en réalisant un procédé selon l'une quelconque des revendications 8 à 16,
**caractérisé en ce que**
l'espace de traitement (5) est conçu dans un tronçon de gaz d'échappement (7) d'une combustion de biogaz (1) et comporte au moins une ouverture de chargement pour les restes de fermentation.

18. Dispositif selon la revendication 17, **caractérisé en ce qu'**à l'intérieur de l'espace de traitement (5) est placé un mécanisme vireur pour les restes de fermentation.

19. Dispositif selon la revendication 17 ou la revendication 18, **caractérisé en ce que** dans le tronçon des gaz d'échappement (7) est monté au moins un filtre à poussières fines placé en aval de l'espace de traitement (5).

20. Dispositif selon l'une quelconque des revendications 17 à 19, **caractérisé en ce que** dans le tronçon des gaz d'échappement (7) est monté au moins un séparateur de condensats placé en aval de l'espace de traitement (5).
